(19) Europäisches Patentamt
European Patent Office
Office européen des brevets

(11) **EP 4 668 830 A1**

(12) **EUROPEAN PATENT APPLICATION**
published in accordance with Art. 153(4) EPC

(43) Date of publication:
**24.12.2025 Bulletin 2025/52**

(21) Application number: **24756141.8**

(22) Date of filing: **06.02.2024**

(51) International Patent Classification (IPC):
*H04W 24/08* (2009.01)

(52) Cooperative Patent Classification (CPC):
**H04W 24/08; H04W 24/10**

(86) International application number:
**PCT/CN2024/076197**

(87) International publication number:
**WO 2024/169767 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.02.2023 CN 202310122174**

(71) Applicant: **Spreadtrum Semiconductor (Nanjing) Co., Ltd.**
**Nanjing, Jiangsu 211899 (CN)**

(72) Inventor: **MIAO, Runquan**
**Nanjing, Jiangsu 211899 (CN)**

(74) Representative: **Vossius & Partner**
**Patentanwälte Rechtsanwälte mbB**
**Siebertstrasse 3**
**81675 München (DE)**

(54) **MEASUREMENT METHOD AND APPARATUS, AND COMPUTER-READABLE STORAGE MEDIUM**

(57) A measurement method and apparatus, and a computer-readable storage medium, the measurement method includes: acquiring measurement configuration information, where the measurement configuration information includes measurement resources and measurement parameters; measuring the measurement resources based on the measurement configuration information and obtaining measurement results; and generating a measurement report based on the measurement results. By adopting the above method, the uplink overhead of a terminal device can be reduced and a beam reporting can be enhanced.

FIG. 1

## Description

The present application claims priority to Chinese Patent Application No. 202310122174.4, filed to China National Intellectual Property Administration on February 15, 2023 and entitled "MEASUREMENT METHOD AND APPARATUS, AND COMPUTER-READABLE STORAGE MEDIUM", the content of which is hereby incorporated by reference in its entirety.

## TECHNICAL FIELD

The present application relates to the field of wireless communication technology and, in particular, to a measurement method and apparatus, and a computer-readable storage medium.

## BACKGROUND

In the existing technology, since an analog beam can only transmit a limited number of shaped-beams at the same time and has a narrow beam width, it can usually only cover a portion of area of a cell. In order to achieve signal coverage of the entire cell, it is necessary to adopt a transmission method in which multiple beams are jointly scanned in time domain to achieve complete coverage of the cell. For unicast transmissions between a network device and a terminal device, a maximum link gain can be obtained when a transmit beam and a receive beam between the network device and the terminal device are aligned. The process of aligning the transmit beam and the receive beam of the network device and terminal device is called beam management.

In R15, beam management includes six processes: beam selection, beam measurement, beam reporting, beam switching, beam indication, and beam recovery. For the beam reporting, the terminal device can detect and estimate the channel quality of multiple beams, and report all or part of measurement results.

In R18, artificial intelligence (AI) based beam management has been further introduced. During training and inference processes of an artificial intelligence model, the beam measurement results are used as inputs for the artificial intelligence model. Usually, the artificial intelligence model is deployed on a network device side and requires the terminal device to transmit a large number of beam measurement results.

## SUMMARY

One of the purposes of the embodiments of the present invention is to provide a measurement method to reduce the uplink overhead of the terminal device. The second purpose is to provide a measurement method that can enhance the existing beam reporting.

In a first aspect, embodiments of the present invention provide a measurement configuration method, including: acquiring measurement configuration information, where the measurement configuration information includes measurement resources and measurement parameters; measuring the measurement resources based on the measurement configuration information and obtaining measurement results; and generating a measurement report based on the measurement results.

Optionally, the measurement parameters include a measurement report content parameter, the measurement report content parameter is used to indicate whether to carry indexes of the measurement resources in the measurement report.

A network device indicates, via the measurement report content parameter, whether to carry the indexes of the measurement resources in the measurement report. The measurement report may not carry any index of measurement resources or may only carry indexes of partial measurement resources. Therefore the amount of data of the measurement report can be effectively reduced and the overhead of the terminal device can be reduced.

Optionally, the measurement parameters further include a quantity parameter, the quantity parameter is used to represent the number of measurement results in the measurement report.

The network device informs, by indicating the quantity parameter, the terminal device of the number of measurement results that need to be reported. The terminal device selects corresponding measurement results from the measurement results based on the quantity parameter and generates a measurement report. The number of measurement results included in the measurement report is determined by the quantity parameter described above.

Optionally, the quantity parameter is used to indicate that the number of measurement results in the measurement report is equal to the number of measurement resources.

If the quantity parameter configured by the network device indicates that the number of measurement results in the measurement report is equal to the number of measurement resources, the measurement report reported by the terminal device may not carry any index of measurement resources.

The network device can indicate via the quantity parameter that the terminal device needs to report the measurement report associated with all measurement resources to achieve global prediction

Optionally, the quantity parameter is further used to indicate whether to carry the indexes of the measurement resources in the measurement report.

The network device indicates, via the quantity parameter, whether to carry the indexes of the measurement resources in the measurement report. The measurement report may not carry any index of measurement resources or may only carry indexes of partial measurement resources. Therefore the amount of data of the measurement report can be effectively reduced and the overhead of the terminal device can be reduced.

Optionally, the generating the measurement report includes: arranging the measurement results corresponding to the respective measurement resources based on a preset arrangement and generating the measurement report.

When generating the measurement report, the terminal device arranges the measurement results associated with the respective measurement resources in the preset arrangement. The network device and the terminal device can pre-agree on the preset arrangement, thus, even if the measurement report reported by the terminal device does not carry the index of the measurement resource, the network device can still accurately obtain the measurement result associated with each measurement resource according to the sorting of the measurement results in the measurement report.

Optionally, the generating the measurement report based on the measurement results includes: selecting a first measurement result from the measurement results corresponding to the respective measurement resources; and generating the measurement report, where the measurement report includes the first measurement result and an index of a measurement resource corresponding to the first measurement result, and differences between the measurement results of other measurement resources and the first measurement result, where the differences between the measurement results of other measurement resources and the first measurement result are arranged based on a preset arrangement.

The terminal device carries the first measurement result, the index of the measurement resource corresponding to the first measurement result, and the differences between other measurement results and the first measurement result in the generated measurement report. Since actual values of other measurement results are not reported, but rather the differences between them and the first measurement result, the amount of data of the measurement report can be reduced, further reducing the uplink overhead of the terminal device.

Optionally, the selecting the first measurement result from the measurement results corresponding to the respective measurement resources includes: selecting a largest measurement result from the measurement results corresponding to the respective measurement resources as the first measurement result.

Optionally, the preset arrangement is an arrangement of the measurement resources in the measurement report.

Optionally, the arrangement of the measurement resources includes any one of the following: arranging in an ascending order according to indexes of the measurement resources, arranging in a descending order according to the indexes of the measurement resources, arranging in an ascending order according to an order of time-domain start positions of the measurement resources, or arranging in a descending order according to an order of time-domain start positions of the measurement resources.

Optionally, the measurement results of the respective measurement resources are divided into N measurement result groups based on an arrangement from largest to smallest, where the generating the measurement report based on the measurement results includes: acquiring a differential measurement result corresponding to an i-th measurement result group, where the differential measurement result corresponding to the i-th measurement result group includes: a first measurement result and an index of a measurement resource corresponding to the first measurement result, differences between other measurement results in the i-th measurement result group and the first measurement result, indexes of measurement resources corresponding to the other measurement results in the i-th measurement result group; and generating the measurement report based on N groups of differential measurement results; $1 \leq i \leq N$, $N \geq 2$.

Optionally, the first measurement result of the differential measurement result corresponding to the i-th measurement result group is: an actual value of a measurement result with a largest value in the i-th measurement result group; or, a difference between a first measurement result in the i-th measurement result group and a largest measurement result in i-1-th measurement result group, when i=1, a first measurement result in a first measurement result group is a largest value of all measurement results; or, a difference between a first measurement result in the i-th measurement result group and a largest measurement result in a first measurement result group.

The network device can indicate a grouping method of measurement result groups to the terminal device. Specifically, the network device can indicate the number of measurement results included in each measurement result group, or indicate the number of measurement result groups included in the measurement report. The terminal device divides the measurement results according to the division method indicated by the network device to obtain corresponding measurement result groups.

The terminal device divides the measurement results into multiple measurement result groups, and obtains corresponding differential measurement results for each measurement result group, which can further reduce the amount of data of the measurement report and further reduce the uplink overhead of the terminal device.

Optionally, the measurement report includes a first group of measurement results and a second group of measurement results.

Optionally, the measurement parameters include a first value and a second value, the first value is used to indicate the number of measurement results of the first group of measurement results, and the second value is used to indicate the number of measurement results of the second group of measurement results.

The network device indicates, via measurement configuration information, that the terminal device needs to feed back the first group of measurement results and the second group of measurement results, thereby increasing the number of reported measurement results and enhancing the existing reporting of the beam measurement results.

Optionally, the first group of measurement results includes top first value measurement results based on a preset arrangement, and the second group of measurement results includes second value largest measurement results.

Optionally, the arrangement of the measurement resources includes any one of the following: arranging in an ascending order according to indexes of the measurement resources, arranging in a descending order according to the indexes of the measurement resources, arranging in an ascending order according to an order of time-domain start positions of the measurement resources, or arranging in a descending order according to an order of time-domain start positions of the measurement resources.

Optionally, the measurement resources include a first measurement resource set and a second measurement resource set.

Optionally, the first group of measurement results includes measurement results associated with all measurement resources in the first measurement resource set, and the second group of measurement results includes measurement results associated with a portion of measurement resources in the second measurement resource set.

Optionally, the measurement parameters include a third value, the third value is used to indicate to report the measurement results associated with all measurement resources in the first measurement resource set.

Optionally, the measurement parameters include a fourth value, the fourth value is used to indicate to report the measurement results associated with the portion of measurement resources in the second measurement resource set.

Optionally, the fourth value is used to indicate to report the number of fourth value largest measurement results associated with the measurement resources in the second measurement resource set.

Optionally, the measurement parameters include a fifth value, the fifth value is used to indicate to report a total number of the measurement results associated with all measurement resources in the first measurement resource set and top fourth value largest measurement results associated with the measurement resources in the second measurement resource set.

Optionally, the measurement report includes a union of the first group of measurement results and the second group of measurement results.

In a second aspect, the embodiments of the present invention also provide another measurement method, including: generating measurement configuration information, where the measurement configuration information includes measurement resources and measurement parameters; issuing the measurement configuration information; and receiving a measurement report.

Optionally, the measurement parameters include a measurement report content parameter, the measurement report content parameter is used to indicate whether to carry indexes of the measurement resources in the measurement report.

Optionally, the measurement parameters further include a quantity parameter, the quantity parameter is used to represent the number of measurement results in the measurement report.

Optionally, the quantity parameter is used to indicate that the number of measurement results in the measurement report is equal to the number of measurement resources.

Optionally, the quantity parameter is further used to indicate whether to carry the indexes of the measurement resources in the measurement report.

Optionally, the measurement parameters include a first value and a second value, the first value is used to indicate the number of measurement results of a first group of measurement results, and the second value is used to indicate the number of measurement results of a second group of measurement results.

Optionally, the measurement resources include a first measurement resource set and a second measurement resource set.

Optionally, the measurement parameters include a third value, the third value is used to indicate to report measurement results associated with all measurement resources in the first measurement resource set.

Optionally, the measurement parameters include a fourth value, the fourth value is used to indicate to report measurement results associated with a portion of the measurement resources in the second measurement resource set.

Optionally, the fourth value is used to indicate to report the number of fourth value largest measurement results associated with the measurement resources in the second measurement resource set.

Optionally, the measurement parameters include a fifth value, the fifth value is used to indicate to report the measurement results associated with all measurement resources in the first measurement resource set and top fourth value largest measurement results associated with the measurement resources in the second measurement resource set.

In a third aspect, the embodiments of the present invention also provide a measurement apparatus, including: an acquiring unit, configured to acquire measurement configuration information, where the measurement configuration information includes measurement resources and measurement parameters; a measuring unit, configured to measure the measurement resources based on the measurement configuration information and obtain measurement results; and a generating unit, configured to generate a measurement report based on the measurement results.

In a fourth aspect, the embodiments of the present invention also provide another measurement apparatus, including: a generating unit, configured to generate measurement configuration information, where the measurement configuration information includes measurement resources and measurement parameters; an issuing unit, configured to issue the measurement configuration information; and a receiving unit, configured to receive a measurement report.

Embodiments of the present invention also provide a computer-readable storage medium, where the computer-readable storage medium is a non-volatile storage medium or a non-transitory storage medium, and stores a computer program therein, when the computer program is executed by a processor, steps of any one of the measurement method described above are executed.

Embodiments of the present invention also provide another measurement device, including: a processor and a memory; where the memory stores a computer program executable on the processor, and when the computer program is executed by the processor, steps of any one of the measurement method described above are executed.

Compared with the existing technology, technical solutions of the embodiments of the present invention have the following beneficial effects.

The network device indicates, via the measurement report content parameter, whether to carry the index of the measurement resource in the measurement report. The measurement report may not carry any index of measurement resources or may only carry indexes of partial measurement resources. Therefore the amount of data of the measurement report can be effectively reduced and the overhead of the terminal device can be reduced.

When generating the measurement report, the terminal device arranges the measurement results associated with respective measurement resources in the preset arrangement. The network device and the terminal device can pre-agree on the preset arrangement, thus based on the sorting of the measurement results in the measurement report, the network device can still accurately determine the measurement result associated with each measurement resource even if the measurement report reported by the terminal device does not carry the index of the measurement resource.

The network device indicates, via measurement configuration information, that the terminal device needs to feed back a first set of measurement results and a second set of measurement results, thereby increasing the number of reported measurement results and enhancing the existing reporting of the beam measurement results.

## BRIEF DESCRIPTION OF DRAWINGS

FIG. 1 is a flowchart of a measurement method in an embodiment of the present invention.
FIG. 2 is a flowchart of anther measurement method in an embodiment of the present invention.
FIG. 3 a schematic structural diagram of a measurement apparatus in an embodiment of the present invention.
FIG. 4 a schematic structural diagram of anther measurement apparatus in an embodiment of the present invention.

## DESCRIPTION OF EMBODIMENTS

In the prior art, the amount of data of beam measurement results reported by a terminal device is relatively large, and the overhead is relatively high. In addition, there is no enhancement for the reporting of the measurement results in the prior art.

In the embodiments of the present invention, a network device indicates, via a measurement report content parameter, whether to carry an index of a measurement resource in a measurement report. The measurement report may not carry any index of measurement resources or may only carry indexes of partial measurement resources. Therefore the amount of data of the measurement report can be effectively reduced and the overhead of the terminal device can be reduced.

In addition, the network device indicates, via measurement configuration information, that the terminal device needs to feed back a first set of measurement results and a second set of measurement results, thereby increasing the number of reported measurement results and enhancing the existing reporting of the beam measurement results.

In the embodiments of the present application, the terminal device may refer to various forms of user equipment (User Equipment, abbreviated as UE), access terminals, user units, user stations, mobile stations, mobile stations (Mobile Station, abbreviated as MSs), remote stations, remote terminals, mobile devices, user terminals, terminal equipment (Terminal Equipment), wireless communication devices, user agents, or user devices. The terminal device may also be a cellular phone, a cordless phone, a session initiation protocol (Session Initiation Protocol, abbreviated as SIP) phone, a wireless local loop (Wireless Local Loop, abbreviated as WLL) station, a personal digital assistant (Personal Digital Assistant, abbreviated as PDA), a handheld device or a computing device with a wireless communication function, or other processing devices, vehicle-mounted devices, wearable devices connected to a wireless modem, a terminal device in a future 5G network or a terminal device in a future evolved public land mobile network (Public Land Mobile Network, abbreviated as PLMN), etc., to which the embodiments of the present application are not limited.

In the embodiments of the present application, the network device may also be referred to as an access network device, for example, it may be a base station (Base Station, abbreviated as BS) (also referred to as a base station device), the network device is an apparatus deployed in a radio access network (Radio Access Network, RAN) to provide a wireless communication function. For example, in a second-generation (2nd-Generation, abbreviated as 2G) network, a device that provides a base station function includes a base transceiver station (Base Transceiver Station, abbreviated as BTS), in a third-generation (3rd-Generation, abbreviated as 3G) network, a device that provides a base station function includes a node B (NodeB), in a fourth-generation (4th-Generation, abbreviated as 4G) network, a device that provides a base station function includes an evolved node B (evolved NodeB, abbreviated as eNB), in a wireless local area network (Wireless Local Area Networks, abbreviated as WLAN), a device that provides a base station function is an access point (Access Point, abbreviated as AP), and a device that provides a base station function in NR includes a next generation Node Base station (next generation Node Base station, abbreviated as gNB) and a next generation evolved node B (ng-eNB), where the gNB and the terminal device communicate using a NR technology, and the ng-eNB and the terminal device communicate using an evolved universal terrestrial radio access (Evolved Universal Terrestrial Radio Access, abbreviated as E-UTRA) technology, and both the gNB and the ng-eNB can be connected to a 5G core network. The network device in the embodiments of the present application also includes a device that provides a base station function in a future new communication system, etc.

In order to clarify the above purpose, technical solutions, and advantages of the present invention, specific embodiments of the present invention will be described in detail below in conjunction with the accompanying drawings thereof.

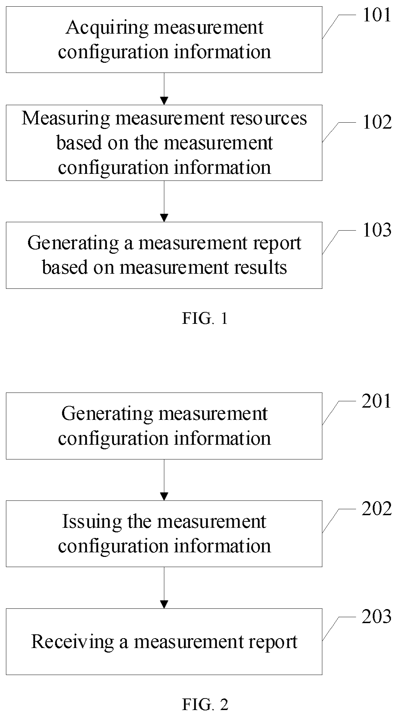

The embodiments of the present invention provides a measurement method, which will be described in detail in the following by specific steps with reference to FIG. 1.

A person skilled in the art can understand that a measurement resource described in the following is, in essence, a measurement resource used in performing beam measurement, each measurement resource corresponds to a beam, a beam index corresponding to the beam can be regarded as an index corresponding to the measurement resource, and a measurement result is a result obtained by performing the beam measurement on the corresponding beam using the measurement resource.

In a specific implementation, the measurement method described in step 101 to step103 below may be executed by a chip having a data processing function in the terminal device, or by a chip module including a chip having a data processing function in the terminal device, or by the terminal device. The following description takes the execution by a terminal device as an example.

Step 101, acquiring measurement configuration information.

Step 102, measuring measurement resources based on the measurement configuration information.

Step 103, generating a measurement report based on measurement results.

In a specific implementation, for an artificial intelligence model or a machine learning model for global prediction, a network device usually performs training and inference of the model. The network device may configure the measurement configuration information for a terminal device and issue measurement configuration to the terminal device. The terminal device may receive the measurement configuration information issued by the network device.

The network device can issue the measurement configuration information to the terminal device via a radio resource control (Radio Resource Control, RRC) message. Alternatively, the network device can issue the measurement configuration information to the terminal device via a system message. Alternatively, the network device can issue the measurement configuration information to the terminal device via a media access layer control element (MAC Control Element, MAC CE).

In a specific implementation, measurement parameters may include a measurement report content parameter and a quantity parameter. The measurement report content parameter described in the embodiments of the present invention can be used to indicate whether an index carrying measurement resources is indicated in the measurement report. The quantity parameter described in the embodiment of the present invention can be used to indicate the number of measurement results in the measurement report.

In the embodiments of the present invention, in the measurement parameters described above, the measurement report content parameter can be represented using a parameter *reportaQuantity* in the existing protocol. However, the embodiments of the present invention have updated the specific meaning of parameter *ReportQuantity*.

In the existing protocol, the measurement report content (reportQuantity) parameter includes "cri-RSRP". When "cri-RSRP" is configured in the measurement report content parameter, it indicates that the measurement report reported by the terminal device includes an index of a measurement resource corresponding to a measurement result that needs to be reported.

In the embodiments of the present invention, the measurement report content (*reportQuantity*) parameter includes "RSRP". When "RSRP" is configured in the measurement report content parameter, it indicates that the measurement report reported by the terminal device does not include the index of the measurement resource corresponding to the measurement result that needs to be reported.

In the embodiments of the present invention, in the measurement parameters described above, the quantity parameter can be represented by a parameter *nrofReportedRS* in the existing protocol. However, the embodiments of the present invention have updated the specific meaning of parameter *nrofReportedRS.*

In the existing protocol, parameter *nrofReportedRS* is used to indicate the number of measurement results that need to be measured in the report. The number of measurement results indicated by parameter *nrofReportedRS* is less than the number of configured measurement resources.

For example, in the existing protocol, the network device configures parameter *nrofReportedRS* as {n1, n2, n3, n4}, that is, an element from {n1, n2, n3, n4} is selected as the number of measurement results in the measurement report, and n1, n2, n3, n4 are all less than the number of measurement resources.

In the embodiment of the present invention, parameter *nrofReportedRS* is updated by adding an indication identifier therein, the indication identifier is used to represent that the measurement report includes the measurement results corresponding to all measurement resources. That is to say, the indication identifier can be used to indicate that the number of measurement results in the measurement report is equal to the number of measurement resources.

For example, a value set of parameter *nrofReportedRS* is {n1, n2, n3, n4, all}, where "all" is the indication identifier described above. When parameter *nrofReportedRS* is configured as "all", it indicates that the terminal device reports the measurement results corresponding to all measurement resources.

For another example, if the number of measurement resources configured by the network device is 10, then the value set of parameter *nrofReportedRS* configured by the network device is {n1, n2, n3, n4, 10}. When parameter *nrofReportedRS* is configured as 10, it indicates that the terminal device reports the measurement results corresponding to all 10 measurement resources.

In a specific implementation, the network device can also configure the quantity parameter, which is used to indicate whether to carry the index of the measurement resource in the measurement report.

Specifically, when the network device configures that the number of measurement results in the measurement report is equal to the number of measurement resources, it is determined that the index of the measurement resource does not carry in the measurement report.

In the embodiments of the present invention, the measurement result can be represented by reference signal receiving power (Reference Signal Receiving Power, RSRP). Alternatively, the measurement result can be represented by other parameters, for example, in subsequent evolutions, the measurement result corresponding to the measurement resource is represented by other forms of parameters.

In a specific implementation, if the network device indicates the terminal device not to carry the index of the measurement resource in the measurement report, the network device can use other methods to acquire the measurement resource associated with each measurement result in the measurement report.

Specifically, the network device and the terminal device can pre-agree on a sorting manner of the measurement results in the measurement report. Since the preset sorting manner is the same as or associated with a sorting manner of the measurement resources, the network device can be informed of which measurement resource is associated with each measurement result in the measurement report after receiving the measurement report.

In a specific implementation, the preset arrangement can be determined by the arrangement of the measurement resources. Specifically, the preset arrangement can be the same as the arrangement of the measurement resources.

Furthermore, the arrangement of the measurement resources can be arranged in an ascending order based on indexes of the measurement resources, or in a descending order based on the indexes of the measurement resources, or in an ascending order based on an order of time-domain start positions of the measurement resources, or in a descending order based on the order of the time-domain start positions of the measurement resources.

For example, the preset sorting manner pre-agreed between the network device and the terminal device is that the indexes of the measurement resources are arranged in the ascending order. The network device receives the measurement report and determines that a first measurement result in the measurement report is associated with measurement resource 1, a second measurement result is associated with measurement resource 2, and so on.

For another example, the preset sorting manner pre-agreed between the network device and the terminal device is that the indexes of the measurement resources are arranged in the descending order. The number of measurement resources is 10, the network device receives the measurement report and determines that the first measurement result in the report is associated with measurement resource 10, the second measurement result is associated with measurement resource 9, and so on. A tenth measurement result is associated with measurement resource 1.

Therefore, even if the terminal device does not report the indexes of the measurement resources, the network device can determine the measurement resource associated with each measurement result in the measurement report, i.e., determine the measurement result associated with each measurement resource. Since the terminal device does not need to report the indexes of the measurement resources, which can effectively reduce the amount of data of the measurement report and reduce the cost of the terminal device reporting the measurement report.

In the embodiments of the present invention, when the number of measurement resources is large, reporting the actual measurement results corresponding to all measurement resources may result in a large amount of data in the measurement report.

In a specific implementation, a differential processing can be performed on the measurement results corresponding to all measurement resources. Specifically, several first measurement results can be selected from the measurement results corresponding to the respective measurement resources; the differences between the measurement results of other measurement resources and the corresponding first measurement results are calculated, and the differences between the measurement results of other measurement resources and the corresponding first measurement results are obtained; the first measurement report and a corresponding resource index of the first measurement report are placed in a preset position, and the differences between other measurement results and the corresponding first measurement results are arranged in a preset arrangement to obtain the measurement report.

In the embodiments of the present invention, the mode of reporting the first measurement results and the corresponding differences can be referred to as a differential reporting mode. In a specific implementation, the differential reporting mode can be divided into three types: a first differential reporting mode, a second differential reporting mode and a third differential reporting mode. For the first differential reporting mode, one measurement result is selected from all measurement results as the first measurement result, and other measurement results can be subtracted from the first measurement result. The first measurement result, the resource index corresponding to the first measurement result, and the differences between other measurement results and the first measurement result are included in the measurement report.

A specific implementation of the first differential reporting mode will be illustrated in the following.

In a specific implementation, a largest measurement result can be selected as the first measurement result from the measurement results corresponding to all measurement resources. That is to say, the first measurement result can be a maximum value among the measurement results corresponding to all measurement resources.

It can be understood that a smallest measurement result can also be selected as the first measurement result from the measurement results corresponding to all measurement resources. Alternatively, one can be randomly selected as the first measurement result from the measurement results corresponding to all measurement resources.

In a specific implementation, in the measurement report, the first measurement result and the resource index corresponding to the first measurement result are placed in the preset position, and other measurement results are arranged in the measurement report based on the preset arrangement.

Specifically, the first measurement result and the resource index corresponding to the first measurement result can be placed at the forefront of the measurement report. Alternatively, the first measurement result and the resource index corresponding to the first measurement result can be placed at the end of the measurement report.

This is illustrated with examples in the following.

Assuming that the network device configures 4 measurement resources, namely measurement resource 1, measurement resource 2, measurement resource 3, and measurement resource 4. The arrangement of the measurement resources configured by the network device is: the indexes of the measurement resources are arranged in the ascending order.

The terminal device measures the 4 measurement resources and obtains measurement result 1, measurement result 2, measurement result 3, and measurement result 4. A person skilled in the art can understand that the measurement resources and the measurement results correspond one-to-one. Here, identifiers of the measurement resources are the same as identifiers of the measurement results, that is, measurement resource 1 is associated with measurement result 1, measurement resource 2 is associated with measurement result 2, and so on. In the following embodiments of the present invention, the association relationships between the measurement resources and the measurement results are referred to this example unless otherwise specified.

The terminal device is informed that measurement result 2 is the maximum value among the four measurement results. An actual value of measurement result 2 is RSRP2, and an index of a measurement resource associated with measurement result 2 is "2". The difference between measurement result 1 and measurement result 2 is $\Delta 1$, the difference between measurement result 3 and measurement result 2 is $\Delta 3$, and the difference between measurement result 4 and measurement result 2 is $\Delta 4$.

Then in the measurement report generated by the terminal device, the information is distributed in the following order: index "2" and RSRP2, $\Delta 1$, $\Delta 3$, $\Delta 4$.

It is to be noted that although the measurement report content parameter indicates that the indexes of the measurement resources need not be carried in the measurement report, the first measurement result may not be a measurement result located at the first position in the preset arrangement. For example, the first measurement result is a measurement result corresponding to measurement resource 3, but the measurement result located at the first position in the preset arrangement is a measurement result corresponding to measurement resource 1. In this case, if the first measurement result is placed as the measurement result located at the first position in the measurement report, an index of the measurement resource associated with the first measurement result needs to be fed back in order for the network device to be informed of which measurement resource the first measurement result is associated with. Further, since the differences between other measurement results and the first measurement result are arranged in the preset arrangement, the network device is able to determine the measurement result associated with the corresponding measurement resource based on the first measurement result and each difference.

Continuing with the above example, the network device receives the measurement report and determines that the measurement result located at the first position in the measurement report is the first measurement result (i.e. the measurement result corresponding to the second measurement resource), and the value of the first measurement result is RSRP2. The network device determines that the measurement result associated with measurement resource 1 is RSRP2-$\Delta$1, the measurement result associated with measurement resource 3 is RSRP2-$\Delta$3, and the measurement result associated with measurement resource 4 is RSRP2-$\Delta$4.

In a specific implementation, there also exists the following scenario: the number of measurement resources is relatively large, reaching dozens or even hundreds. If only one first measurement result is set as in the above example, there may be significant differences between some measurement results and the first measurement result, resulting in a still large number of bits required for the differences.

In response to the above scenario, in the embodiment of the present invention, the second differential reporting mode is also provided. In the second differential reporting mode, the terminal device first sorts the measurement results from largest to smallest, and then divides the measurement results into N groups based on a grouping manner configured by the network device or a default grouping manner, each group including at least one measurement result, $N \geq 2$, and N is less than the total number of measurement resources.

In a specific implementation, the network device can configure measure a specific value of N, and the terminal device divides all measurement results into N groups based on the configuration of the network device. The network device can also configure the number L of measurement results contained in each measurement result group, and the terminal device divides the measurement results to obtain N measurement result groups based on the configuration of the network device.

If N cannot be divided by M, the terminal device determines that each of the first N-1 groups contains $\lfloor M/N \rfloor$ (rounded down to a nearest integer) measurement results, and the N-th group contains the remaining measurement results.

For example, if the network device configures the number of measurement result groups as N=3 and there are 10 measurement resources in total (i.e., corresponding to 10 measurement results), the terminal device will divide the 10 measurement results into 3 measurement result groups. A first measurement result group includes the top 3 largest measurement results, a second measurement result group includes the 4-th to 6-th largest measurement results, and a third measurement result group includes the smallest 4 measurement results.

Assuming that a total number of measurement results is M, if L can be divided by M, then N=M/L.

If L cannot be divided by M, the terminal device determines to divide the M measurement results into $\lceil M/L \rceil$ (rounded up to a nearest integer) groups, the first $\lceil M/L \rceil - 1$ groups containing L measurement results and the $\lceil M/L \rceil$ -th group containing the remaining measurement results. The above $\lceil M/L \rceil = N$.

For example, if the network device configures that the number of measurement results contained in each measurement result group is L=3, and the total number of measurement results is M=10, the terminal device will divide the 10 measurement results into 4 groups, a first measurement result group includes the top 3 largest measurement results, a second measurement result group includes the 4-th to 6-th largest measurement results, a third measurement result group includes the 7-th to 9-th largest measurement results, and a fourth measurement result group includes the smallest measurement result.

It can be understood that the grouping manner of the measurement results is not limited to the above examples, and can also be set based on specific application scenarios.

For each measurement result group, a differential measurement result corresponding to this measurement result group is acquired.

Specifically, for the i-th measurement result group, a corresponding differential measurement result can be first determined, the corresponding differential measurement result is: the first measurement result and the index of the measurement resource corresponding to the first measurement result, the differences between other measurement results in the i-th measurement result group and the first measurement result, and the indexes of the measurement resources corresponding to other measurement results in the i-th measurement result group. The measurement report is generated based on differential measurement results corresponding to the N measurement result groups.

In the second differential reporting mode, the first measurement result in the i-th measurement result group can be an actual value of a measurement result with a largest value in the i-th measurement result group.

For example, the measurement resources configured by the network device include measurement resource 1 to measurement resource 8. The terminal device uses the measurement resources for measurement, and obtains measurement result 1 to measurement result 8. A new sorting is obtained based on the measurement results arranged from largest to smallest: measurement result 2, measurement result 1, measurement result 8, measurement result 5, measurement result 3, measurement result 4, measurement result 7, and measurement result 6. At this time, a network side indicates to divide into N=2 groups. Then the first measurement result group includes measurement result 2, measurement result 1, measurement result 8, and measurement result 5, and the second measurement result group includes measurement result 3, measurement result 4, measurement result 7, and measurement result 6.

In the first measurement result group, measurement result 2 is the maximum value among the 4 measurement results. The actual value of measurement result 2 is RSRP2 and the index of measurement result 2 is "2"; the difference between measurement result 1 and measurement result 2 is $\Delta 1$, the difference between measurement result 8 and measurement result 2 is $\Delta 8$, and the difference between measurement result 5 and measurement result 2 is $\Delta 5$.

In the second measurement result group, measurement result 3 is the maximum value among the 4 measurement results. The actual value of measurement result 3 is RSRP3, and the index of measurement result 3 is "3"; the difference between measurement result 4 and measurement result 3 is $\Delta 4$, the difference between measurement result 7 and measurement result 3 is $\Delta 7$, and the difference between measurement result 6 and measurement result 3 is $\Delta 6$.

Then the differential measurement result corresponding to the first measurement result group is: index "2" and RSRP2, index "1" and $\Delta 1$, index "8" and $\Delta 8$, index "5" and $\Delta 5$. The differential measurement result corresponding to the second measurement result group is: index "3" and RSRP3, index "4" and $\Delta 4$, index "7" and $\Delta 7$, index "6" and $\Delta 6$.

Therefore, in the measurement report generated by the terminal device, the arrangement of various information is as follows: index "2" and RSRP2, index "1" and $\Delta 1$, index "8" and $\Delta 8$, index "5" and $\Delta 5$, index "3" and RSRP3, resource index "4" and $\Delta 4$, index "7" and $\Delta 7$, index "6" and $\Delta 6$.

In the embodiments of the present invention, in order to further reduce reporting overhead, the third differential reporting mode is provided based on the second differential reporting mode. In the third differential reporting mode, the difference between the first measurement result in the i-th measurement result group and the largest measurement result in the i-1-th measurement result group, when i=1, the first measurement result in measurement result group 1 is the largest of all measurement results.

Continuing with the above example, the actual value of the first measurement result in the second measurement result group is RSRP3, and the difference between RSRP3 and RSRP2 is $\Delta 3$.

Therefore, in the measurement report generated by the terminal device, the arrangement of various information is as follows: index "2" and RSRP2, index "1" and $\Delta 1$, index "8" and $\Delta 8$, index "5" and $\Delta 5$, index "3" and $\Delta 3$, index "4" and $\Delta 4$, index "7" and $\Delta 7$, index "6" and A6.

If the number of measurement result groups is more, further expansion can be made for the third differential reporting mode.

For example, the measurement resources configured by the network device include measurement resource 1 to measurement resource 10. The terminal device uses the measurement resources for measurement, and obtains measurement result 1 to measurement result 10. A new sorting is obtained based on the measurement results arranged from largest to smallest: measurement result 2, measurement result 1, measurement result 8, measurement result 5, measurement result 3, measurement result 4, measurement result 7, measurement result 6, measurement result 9, and measurement result 10. At this time, the network side indicates to divide into N=3 groups. Then the first measurement result group includes measurement result 2, measurement result 1, and measurement result 8, the second measurement result group includes measurement result 5, measurement result 3, and measurement result 4, the third measurement result group includes measurement result 7, measurement result 6, measurement result 9, and measurement result 10.

The difference between an actual value of measurement result 7 and the actual value of measurement result 2 is $\Delta 7$, and the difference between the actual value of measurement result 7 and an actual value of measurement result 5 is $\Delta 7'$. The difference between measurement result 1 and measurement result 2 is $\Delta 1$, and the difference between measurement result 8 and measurement result 2 is $\Delta 8$, the difference between measurement result 5 and measurement result 2 is $\Delta 5$, the difference between measurement result 3 and measurement result 5 is $\Delta 3$, and the difference between measurement result 4 and measurement result 5 is $\Delta 5$, the difference between measurement result 6 and measurement result 7 is $\Delta 6$, the difference between measurement result 9 and measurement result 7 is $\Delta 9$, and the difference between measurement result 10 and measurement result 7 is $\Delta 10$.

Therefore, in the measurement report generated by the terminal device, the arrangement of various information is as follows: index "2" and RSRP2, index "1" and $\Delta 1$, index "8" and $\Delta 8$, index "5" and $\Delta 5$, index "3" and $\Delta 3$, index "4" and $\Delta 4$, index "7" and $\Delta 7$, index "6" and $\Delta 6$, index "9" and $\Delta 9$, index "10" and $\Delta 10$.

Alternatively, in the measurement report generated by the terminal device, the arrangement of various information is as follows: index "2" and RSRP2, index "1" and Δ1, index "8" and Δ8, index "5" and Δ5, index "3" and Δ3, index "4" and Δ4, index "7" and Δ7', index "6" and Δ6, index "9" and Δ9, index "10" and Δ10.

By setting at least two measurement result groups, and obtaining the differential measurement result of each measurement result group, the amount of data of the measurement report can be further reduced, thereby reducing the uplink overhead of the terminal device.

In a specific implementation, for an artificial intelligence model for partial prediction, the training and inference of the model are carried out on the network device side. The network device issues the measurement configuration information to the terminal device, and the terminal device measures based on the measurement configuration information and reports the measurement results. The network device trains the artificial intelligence model/neural network model based on the received measurement results. In this scenario, the terminal device can report partial measurement results. The network device can train the model based on the partial measurement results and infer the measurement results corresponding to all measurement resources.

In the embodiments of the present invention, in the measurement configuration information, the network device can indicate the terminal device to report the first group of measurement results and the second group of measurement results, that is, the terminal device needs to carry the first group of measurement results and the second group of measurement results in the measurement report.

Specifically, the measurement configuration information configured by the network device includes measurement resources and measurement parameters, where the network device configures one measurement resource group, the measurement resource group includes multiple measurement resources. The measurement parameters include a first value and a second value, the first value indicates the number of measurement results of the first group of measurement results, and the second value indicates the number of measurement results of the second group of measurement results. The following illustrates the measurement method provided in the embodiments of the present invention in a case where one measurement resource group is configured by the network device.

After receiving the measurement configuration information, the terminal device uses each measurement resource in the measurement resource group to perform measurement operations and obtains measurement results corresponding to all measurement resources. The terminal device, based on the first value and the second value, selects first value measurement results from all measurement results to form the first group of measurement results, and selects second value measurement result from all measurement results to form the second group of measurement results, respectively. The terminal device generates a measurement report, the measurement report includes the first group of measurement results and the second group of measurement results.

In a specific implementation, the terminal device selects the top first value measurement results from all measurement results, which can refer to: selecting the top first value measurement results from all measurement results based on the preset arrangement. The preset arrangement can be determined based on the arrangement of the measurement resources. Furthermore, the preset arrangement can be the same as the arrangement of the measurement resources.

For example, the measurement resource set includes 10 measurement resources, numbered sequentially from measurement resource 1 to measurement resource 10. The measurement results corresponding to the 10 measurement resources are numbered sequentially from measurement result 1 to measurement result 10.

The arrangement of the measurement resources is in the ascending order based on the indexes of the measurement resources. If the first value is 4, the measurement result 1 to measurement result 4 corresponding to measurement resource 1 to measurement resource 4 are selected from the 10 measurement results as the first group of measurement results.

It can be understood that the preset arrangement can be opposite to the arrangement of the measurement resources. For example, if the arrangement of the measurement resources is in the ascending order based on the indexes of the measurement resources, then in the descending order based on the indexes of the measurement resources, first value measurement results are selected from all measurement results as the first group of measurement results.

In a specific implementation, the terminal device selects second value measurement results from all measurement results, which can refer to: selecting the optimal second value measurement results from all measurement results. The optimal second value measurement results can be the top second value measurement results with the largest values among all measurement results.

For example, the measurement resource set includes 10 measurement resources, numbered sequentially from measurement resource 1 to measurement resource 10. The measurement results corresponding to the 10 measurement resources are numbered sequentially from measurement result 1 to measurement result 10. If the second value is 4, among the 10 measurement results, measurement result 1, measurement result 3, measurement result 6, and measurement result 8 are the top 4 largest measurement results and are used as the second set of measurement results.

In a specific implementation, the first value in the measurement parameters can be represented by parameter *nrofReportedRS* in the existing protocol, while the second value can be represented by a newly added parameter.

In one embodiment of the present invention, the second value is represented by parameter *nrofReportedRS-r18.* It can be understood that the specific representation form of the second value can also be other forms, and is not limited to the above example.

In the embodiments of the present invention, the first value described above uses parameter *nrofReportedRS* in the existing protocol, but the meaning of the parameter *nrofReportedRS* has been modified. In the existing protocol, parameter *nrofReportedRS* represents that parameter *nrofReportedRS* largest measurement results are selected from all measurement results, that is, which essentially represents the same meaning as the second value in the embodiments of the present invention.

By modifying the meanings of some parameters in the existing protocol, it can effectively be compatible with the existing protocol.

It should be noted that the meaning of parameter *nrofReportedRS* is modified only when the measurement parameters include the first value and the second value. That is to say, the meaning of the parameter *nrofReportedRS* is modified only when the network device configures both parameter *nrofReportedRS* and parameter *nrofReportedRS-r18.*

In a specific implementation, the number of measurement results in the measurement report can be less than a sum of the first value and the second value.

Specifically, there may be an intersection between the first group of measurement results and the second group of measurement results. As shown in the above example, the first group of measurement results includes measurement result 1 to measurement result 4, and the second group of measurement results includes measurement result 1, measurement result 3, measurement result 6, and measurement result 8. Therefore, the measurement report includes the union of the first group of measurement results and the second group of measurement results: measurement result 1, measurement result 2, measurement result 3, measurement result 4, measurement result 6, and measurement result 8.

The measurement configuration information configured by the network device includes measurement resources and measurement parameters. Where the network device configures two measurement resource groups, namely a first measurement resource group and a second measurement resource group. The first measurement resource group may include at least one measurement resource, and the second measurement resource group may include at least one measurement resource.

The following illustrates the measurement method provided in the embodiments of the present invention in a case where two measurement resource groups are configured by the network device.

In a specific implementation, the measurement parameters may include a third value, the third value is used to indicate to report the measurement results associated with all measurement resources in a first measurement resource set. The measurement parameters may also include a fourth value, the fourth value is used to indicate to report the measurement results associated with a portion of the measurement resources in the second measurement resource set.

That is to say, the network device indicates, via the third value, that the terminal device needs to report the measurement results associated with the respective measurement resources in the first measurement resource group. The network device indicates, via the fourth value, that the terminal device needs to report a portion of the measurement results associated with the respective measurement resources in the second measurement resource group.

In a specific implementation, the network device can display indicate the third value. For example, the network device can directly configure the third value, the third value is equal to the number of measurement resources in the first measurement resource set.

The network device can also implicitly indicate the third value. The network device can directly indicate all measurement results associated with the measurement resources in the first measurement resource set need to be reported. Alternatively, the network device can also configure an indicator bit in the first measurement resource set, the indicator bit is used to indicate that all measurement results associated with the measurement resources in the first measurement resource set need to be reported.

In the embodiments of the present invention, after receiving the measurement configuration information, the terminal device uses each measurement resource in the first measurement resource group to perform the measurement operation, and uses each measurement resource in the second measurement resource group to perform the measurement operation. The terminal device obtains the measurement results associated with all measurement resources in the first measurement resource group as the first group of measurement results. The terminal device selects fourth value optimal measurement results from the measurement results associated with the second measurement resource group as the second group of measurement results.

For example, the network device configures that the first measurement resource set includes 10 measurement resources, configures that the second measurement resource set includes 10 measurement resources, and the fourth value is 4. The terminal device uses 10 measurement resources of the first measurement resource set for measurement to obtain 10 measurement results as the first group of measurement results, uses 10 measurement resources of the second measurement resource set for measurement to obtain 10 measurement results, and selects 4 largest measurement results to obtain the second group of measurement results. Based on the first group of measurement results and the second group of measurement results, the measurement report is generated.

In a specific implementation, the number of measurement results included in the measurement report may be less than a sum of the third value and the fourth value. For example, there may be an intersection between the first group of measurement results and the second group of measurement results. The measurement results in the measurement report are the union of the first group of measurement results and the second group of measurement results, and the intersection part is not reported repeatedly.

In a specific implementation, the fourth value can use parameter *nrofReportedRS* in the existing protocol to indicate that the optimal top parameter *nrofReportedRS* measurement results are selected from the second group of measurement results.

In other embodiments, the measurement parameters may also include a fifth value. The fifth value can be used to indicate a total number of measurement results that need to be included in the measurement report. Alternatively, the fifth value can be used to indicate to report the measurement results associated with all measurement resources in the first measurement resource set, and the top fourth value largest measurement results associated with the measurement resources in the second measurement resource set.

In a specific implementation, the fifth value can use parameter *nrofReportedRS* in the existing protocol, where parameter *nrofReportedRS* represents a total number of measurement results included in the measurement report.

Alternatively, parameter *nrofReportedRS* represents that the measurement report includes the measurement results associated with all measurement resources in the first measurement resource set, and the top fourth value largest measurement results associated with measurement resources in the second measurement resource set.

It can be seen that in the embodiments of the present invention, the same parameter *nrofReportedRS* can represent different meanings in different situations. Thus, it is possible to adapt the technical solution described in the embodiments of the present invention without making significant modifications to the existing protocol.

In a specific implementation, the first group of measurement results associated with the first measurement resource set can be regarded as an input to the artificial intelligence model/neural network model. The second group of measurement results associated with the second measurement resource set can be regarded as an output of the artificial intelligence model/neural network model.

Referring to FIG. 2, another measurement method in the embodiments of the present invention is provided.

In a specific implementation, the measurement method described in step 201 to step 203 can be executed by a chip having a data processing function in a network device, or by a chip module including a chip having a data processing function in the network device, or by the network device. The following description is given by taking the execution by a network device as an example.

Step 201, generating measurement configuration information.

Step 202, issuing the measurement configuration information.

Step 203, receiving a measurement report.

In a specific implementation, the specific execution process of step 201 to step 203 described above essentially corresponds to step 101 to step 103 described above. Therefore, reference may be made correspondingly to the description of the process executed by the network device in step 101 to step 103 above, and details will not be repeated here.

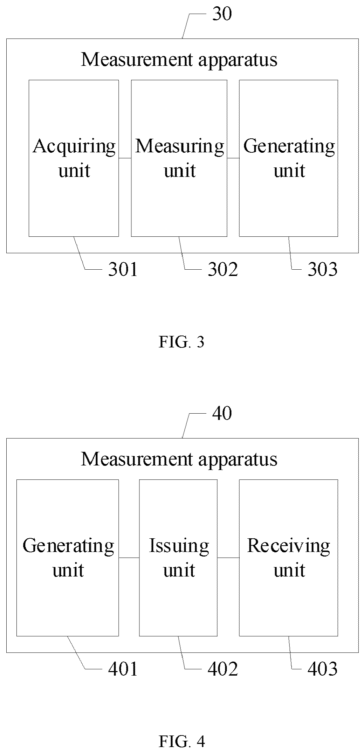

Referring to FIG. 3, a measurement apparatus 30 in the embodiments of the present invention is provided, including: an acquiring unit 301, a measuring unit 302, and a generating unit 303, where:

the acquiring unit 301 is configured to acquire measurement configuration information, where the measurement configuration information includes measurement resources and measurement parameters;
the measuring unit 302 is configured to measure the measurement resources based on the measurement configuration information and obtain measurement results;
the generating unit 303 is configured to generate a measurement report based on the measurement results.

In a specific implementation, the specific execution processes of the acquiring unit 301, the measuring unit 302, and the generating unit 303 described above can be referred to step 101 to step 103 correspondingly, it will not be repeated here.

In a specific implementation, the measurement apparatus 30 described above can correspond to a chip having a data processing capability in the terminal device, such as a baseband chip, or correspond to a chip module including a chip having a data processing capability in terminal device, such as a baseband chip module, or correspond to a terminal device.

Referring to FIG. 4, the embodiments of the present invention also provide another measurement apparatus 40, including: a generating unit 401, an issuing unit 402, and a receiving unit 403, where:

the generating unit 401 is configured to generate measurement configuration information, where the measurement configuration information includes measurement resources and measurement parameters;
the issuing unit 402 is configured to issue the measurement configuration information;
the receiving unit 403 is configured to receive a measurement report.

In a specific implementation, the specific execution processes of the generating unit 401, the issuing unit 402, and the receiving unit 403 described above can be referred to step 201 to step 203 correspondingly, it will not be repeated here.

In a specific implementation, the measurement apparatus 40 described above can correspond to a chip having a data processing capability in the network device, or correspond to a chip module including a chip having a data processing capability in the network device, or correspond to a network device.

In a specific implementation, the various modules/units included in the apparatuses and products described in the above embodiments can be software modules/units, hardware modules/units, or partially software modules/units and partially hardware modules/units.

For example, for various apparatuses and products applied to or integrated into chips, each module/unit included can be implemented in hardware such as a circuit, or at least part of modules/units can be implemented in software programs, the software programs run on a processor integrated inside the chip, and the remaining (if any) modules/units can be implemented in hardware such as circuits, etc. For various apparatuses and products applied to or integrated into chip modules, each module/unit included can be implemented in hardware such as a circuit, different modules/units can be located in a same component of the chip module (such as a chip, a circuit module, etc.) or in different components, or at least part of modules/units can be implemented in software programs, the software programs run on a processor integrated inside the chip module, and the remaining (if any) modules/units can be implemented in hardware such as circuits. For various apparatuses and products applied to or integrated into terminals, the various modules/units included can be implemented in hardware such as circuits, different modules/units can be located in a same component (such as a chip, a circuit module, etc.) or different components within the terminal, or at least part of modules/units can be implemented in software programs, the software programs run on a processor integrated inside the terminal, and the remaining (if any) modules/units can be implemented in hardware such as circuits.

The embodiments of the present invention also provide a computer-readable storage medium, where the computer-readable storage medium is a non-volatile storage medium or a non-transitory storage medium and stores a computer program therein, when the computer program is executed by a processor, the steps of the measurement method corresponding to step 101 to step 103 described above are executed, or the steps of the measurement method corresponding to step 201 to step 203 described above are executed.

The embodiments of the present invention also provide another measurement device, including: a memory and a processor, where the memory stores a computer program executable on the processor, and when the computer program is executed by the processor, the steps of the measurement method corresponding to step 101 to step 103 described above are executed, or the steps of the measurement method corresponding to step 201 to step 203 described above are executed.

Ordinary skill in the art can understand that all or part of the steps in the various methods of the above embodiments can be completed by a program instructing relevant hardware, the program can be stored in a computer-readable storage medium, and the storage medium may include a ROM, a RAM, a magnetic disk or an optical disk, etc.

Although the present invention is disclosed as above, the present invention is not limited to this. Any skilled in the art may make various changes and modifications without departing from the spirit and scope of the present invention, therefore the scope of protection of the present invention shall be subject to the scope defined by the claims.

**Claims**

1. A measurement method, comprising:

   acquiring measurement configuration information, wherein the measurement configuration information comprises measurement resources and measurement parameters;
   measuring the measurement resources based on the measurement configuration information and obtaining measurement results; and
   generating a measurement report based on the measurement results.

2. The measurement method according to claim 1, wherein the measurement parameters comprise a measurement report content parameter, the measurement report content parameter is used to indicate whether to carry indexes of the measurement resources in the measurement report.

3. The measurement method according to claim 1 or 2, wherein the measurement parameters further comprise a quantity parameter, the quantity parameter is used to represent the number of measurement results in the measurement report.

4. The measurement method according to claim 3, wherein the quantity parameter is used to indicate that the number of measurement results in the measurement report is equal to the number of measurement resources.

5. The measurement method according to claim 3, wherein the quantity parameter is further used to indicate whether to carry the indexes of the measurement resources in the measurement report.

6. The measurement method according to claim 1, wherein the generating the measurement report comprises:
arranging the measurement results corresponding to the respective measurement resources based on a preset arrangement and generating the measurement report.

7. The measurement method according to claim 1, wherein the generating the measurement report based on the measurement results comprises:

selecting a first measurement result from the measurement results corresponding to the respective measurement resources; and
generating the measurement report, wherein the measurement report comprises the first measurement result and an index of a measurement resource corresponding to the first measurement result, and differences between the measurement results of other measurement resources and the first measurement result, wherein the differences between the measurement results of other measurement resources and the first measurement result are arranged based on a preset arrangement.

8. The measurement method according to claim 7, wherein the selecting the first measurement result from the measurement results of the respective measurement resources comprises:
selecting a largest measurement result from the measurement results corresponding to the respective measurement resources as the first measurement result.

9. The measurement method according to claim 7 or 8, wherein the preset arrangement is an arrangement of the measurement resources.

10. The measurement method according to claim 9, wherein the arrangement of the measurement resources comprises any one of the following:
arranging in an ascending order according to indexes of the measurement resources, arranging in a descending order according to the indexes of the measurement resources, arranging in an ascending order according to an order of time-domain start positions of the measurement resources, or arranging in a descending order according to an order of time-domain start positions of the measurement resources.

11. The measurement method according to claim 1, wherein the measurement results of the respective measurement resources are divided into N measurement result groups based on an arrangement from largest to smallest, wherein the generating the measurement report based on the measurement results comprises:

acquiring a differential measurement result corresponding to an i-th measurement result group, wherein the differential measurement result corresponding to the i-th measurement result group comprises: a first measurement result and an index of a measurement resource corresponding to the first measurement result, differences between other measurement results in the i-th measurement result group and the first measurement result, indexes of measurement resources corresponding to the other measurement results in the i-th measurement result group; and
generating the measurement report based on differential measurement results corresponding to the N measurement result groups; $1 \leq i \leq N$, $N \geq 2$.

12. The measurement method according to claim 11, wherein the first measurement result of the differential measurement result corresponding to the i-th measurement result group is:

an actual value of a measurement result with a largest value in the i-th measurement result group; or,
a difference between a first measurement result in the i-th measurement result group and a largest measurement result in i-1-th measurement result group, when i=1, a first measurement result in a first measurement result group is a largest value of all measurement results; or,
a difference between a first measurement result in the i-th measurement result group and a largest measurement result in a first measurement result group.

13. The measurement method according to claim 1, wherein the measurement report comprises a first group of measurement results and a second group of measurement results.

14. The measurement method according to claim 13, wherein the measurement parameters comprise a first value and a second value, the first value is used to indicate the number of measurement results of the first group of measurement results, and the second value is used to indicate the number of measurement results of the second group of measurement results.

15. The measurement method according to claim 14, wherein the first group of measurement results comprises top first value measurement results based on a preset arrangement, and the second group of measurement results comprises second value largest measurement results.

16. The measurement method according to claim 15, wherein the preset arrangement is determined based on an arrangement of the measurement resources.

17. The measurement method according to claim 16, wherein the arrangement of the measurement resources comprises any one of the following:
arranging in an ascending order according to indexes of the measurement resources, arranging in a descending order according to the indexes of the measurement resources, arranging in an ascending order according to an order of time-domain start positions of the measurement resources, or arranging in a descending order according to an order of time-domain start positions of the measurement resources.

18. The measurement method according to claim 13, wherein the measurement resources comprise a first measurement resource set and a second measurement resource set.

19. The measurement method according to claim 18, wherein the first group of measurement results comprises measurement results associated with all measurement resources in the first measurement resource set, and the second group of measurement results comprises measurement results associated with a portion of measurement resources in the second measurement resource set.

20. The measurement method according to claim 19, wherein the measurement parameters comprise a third value, the third value is used to indicate to report the measurement results associated with all measurement resources in the first measurement resource set.

21. The measurement method according to claim 19, wherein the measurement parameters comprise a fourth value, the fourth value is used to indicate to report the measurement results associated with the portion of measurement resources in the second measurement resource set.

22. The measurement method according to claim 21, wherein the fourth value is used to indicate to report the number of fourth value largest measurement results associated with the measurement resources in the second measurement resource set.

23. The measurement method according to claim 19, wherein the measurement parameters comprise a fifth value, the fifth value is used to indicate to report a total number of the measurement results associated with all measurement resources in the first measurement resource set and top fourth value largest measurement results associated with the measurement resources in the second measurement resource set.

24. The measurement method according to claim 13, wherein the measurement report comprises a union of the first group of measurement results and the second group of measurement results.

25. A measurement method, comprising:

generating measurement configuration information, wherein the measurement configuration information comprises measurement resources and measurement parameters;
issuing the measurement configuration information; and
receiving a measurement report.

26. The measurement method according to claim 25, wherein the measurement parameters comprise a measurement report content parameter, the measurement report content parameter is used to indicate whether to carry indexes of the measurement resources in the measurement report.

27. The measurement method according to claim 25 or 26, wherein the measurement parameters further comprise a quantity parameter, the quantity parameter is used to represent the number of measurement results in the measurement report.

28. The measurement method according to claim 27, wherein the quantity parameter is used to indicate that the number of measurement results in the measurement report is equal to the number of measurement resources.

29. The measurement method according to claim 27, wherein the quantity parameter is further used to indicate whether to carry the indexes of the measurement resources in the measurement report.

30. The measurement method according to claim 25, wherein the measurement parameters comprise a first value and a second value, the first value is used to indicate the number of measurement results of a first group of measurement results, and the second value is used to indicate the number of measurement results of a second group of measurement results.

**31.** The measurement method according to claim 30, wherein the measurement resources comprise a first measurement resource set and a second measurement resource set.

**32.** The measurement method according to claim 31, wherein the measurement parameters comprise a third value, the third value is used to indicate to report measurement results associated with all measurement resources in the first measurement resource set.

**33.** The measurement method according to claim 31 or 32, wherein the measurement parameters comprise a fourth value, the fourth value is used to indicate to report measurement results associated with a portion of the measurement resources in the second measurement resource set.

**34.** The measurement method according to claim 33, wherein the fourth value is used to indicate to report the number of fourth value largest measurement results associated with the measurement resources in the second measurement resource set.

**35.** The measurement method according to claim 34, wherein the measurement parameters comprise a fifth value, the fifth value is used to indicate to report the measurement results associated with all measurement resources in the first measurement resource set and top fourth value largest measurement results associated with the measurement resources in the second measurement resource set.

**36.** A measurement apparatus, comprising:

an acquiring unit, configured to acquire measurement configuration information, wherein the measurement configuration information comprises measurement resources and measurement parameters;
a measuring unit, configured to measure the measurement resources based on the measurement configuration information and obtain measurement results; and
a generating unit, configured to generate a measurement report based on the measurement results.

**37.** A measurement apparatus, comprising:

a generating unit, configured to generate measurement configuration information, wherein the measurement configuration information comprises measurement resources and measurement parameters;
an issuing unit, configured to issue the measurement configuration information; and

a receiving unit, configured to receive a measurement report.

**38.** A computer-readable storage medium, wherein the computer-readable storage medium is a non-volatile storage medium or a non-transitory storage medium, and stores a computer program therein, when the computer program is executed by a processor, steps of the measurement method according to any one of claims 1 to 24, or steps of the measurement method according to any one of claims 25 to 35 are executed.

**39.** A measurement device, comprising: a processor and a memory; wherein the memory stores a computer program executable on the processor, and when the computer program is executed by the processor, steps of the measurement method according to any one of claims 1 to 24 or steps of the measurement method according to any one of claims 25 to 35 are executed.

Acquiring measurement
configuration information — 101

↓

Measuring measurement resources
based on the measurement
configuration information — 102

↓

Generating a measurement report
based on measurement results — 103

FIG. 1

Generating measurement
configuration information — 201

↓

Issuing the measurement
configuration information — 202

↓

Receiving a measurement report — 203

FIG. 2

30

Measurement apparatus

| Acquiring unit | Measuring unit | Generating unit |

301      302      303

FIG. 3

40

Measurement apparatus

| Generating unit | Issuing unit | Receiving unit |

401      402      403

FIG. 4

## INTERNATIONAL SEARCH REPORT

| International application No. |
| --- |
| **PCT/CN2024/076197** |

| A. | CLASSIFICATION OF SUBJECT MATTER |
| --- | --- |

H04W24/08(2009.01)i

According to International Patent Classification (IPC) or to both national classification and IPC

| B. | FIELDS SEARCHED |
| --- | --- |

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, CNTXT, ENTXTC, VEN, IEEE: 报告, 参数, 测量, 差分, 配置, 数量, 数目, 指示, 组, 索引, 排列, 排序, 顺序, measur+, configuration, difference, group, order, report, sequence, +quantity, nrof+, number, indicat+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 110035450 A (VIVO MOBILE COMMUNICATION CO., LTD.) 19 July 2019 (2019-07-19) claims 27-31, and description, paragraphs [0044]-[0136] | 1-10, 25-29, 36-39 |
| Y | CN 110035450 A (VIVO MOBILE COMMUNICATION CO., LTD.) 19 July 2019 (2019-07-19) claims 27-31, and description, paragraphs [0044]-[0136] | 11-24, 30-35 |
| Y | CN 110661556 A (HUAWEI TECHNOLOGIES CO., LTD.) 07 January 2020 (2020-01-07) description, paragraphs [0044]-[0136] | 11-24, 30-35 |
| A | WO 2019137477 A1 (VIVO MOBILE COMMUNICATION CO., LTD.) 18 July 2019 (2019-07-18) entire document | 1-39 |
| A | US 2022361026 A1 (QUALCOMM INC.) 10 November 2022 (2022-11-10) entire document | 1-39 |
| A | ERICSSON. "On beam indication, measurement, and reporting" *3GPP TSG-RAN WG1 NR Ad Hoc #3, R1-1716350*, 21 September 2017 (2017-09-21), entire document | 1-39 |

☐ Further documents are listed in the continuation of Box C.  ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **23 April 2024** | **28 April 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/076197**

| Patent document cited in search report | | | Publication date (day/month/year) | Patent family member(s) | | | Publication date (day/month/year) |
|---|---|---|---|---|---|---|---|
| CN | 110035450 | A | 19 July 2019 | JP | 2021519001 | A | 05 August 2021 |
| | | | | US | 2021076241 | A1 | 11 March 2021 |
| | | | | KR | 20200097335 | A | 18 August 2020 |
| | | | | WO | 2019137477 | A1 | 18 July 2019 |
| | | | | KR | 20220025121 | A | 03 March 2022 |
| | | | | EP | 3739942 | A1 | 18 November 2020 |
| | | | | IN | 202027034581 | A | 02 October 2020 |
| CN | 110661556 | A | 07 January 2020 | WO | 2020001577 | A1 | 02 January 2020 |
| WO | 2019137477 | A1 | 18 July 2019 | CN | 110035450 | A | 19 July 2019 |
| | | | | KR | 20200097335 | A | 18 August 2020 |
| | | | | IN | 202027034581 | A | 02 October 2020 |
| | | | | EP | 3739942 | A1 | 18 November 2020 |
| | | | | US | 2021076241 | A1 | 11 March 2021 |
| | | | | JP | 2021519001 | W | 05 August 2021 |
| | | | | KR | 20220025121 | A | 03 March 2022 |
| US | 2022361026 | A1 | 10 November 2022 | EP | 4335154 | A1 | 13 March 2024 |
| | | | | WO | 2022236236 | A1 | 10 November 2022 |
| | | | | CN | 117242819 | A | 15 December 2023 |
| | | | | IN | 202347060885 | A | 13 October 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310122174